# EUROPEAN PATENT SPECIFICATION

(11) **EP 1 576 599 B1**
(45) Date of publication and mention of the grant of the patent: **06.12.2006**
(21) Application number: 03773897.8
(22) Date of filing: 20.11.2003
(51) Int. Cl.: G11B 7/24

(54) **USE OF BI-LAYER PHOTOLITHOGRAPHIC RESISTS AS NEW MATERIAL FOR OPTICAL STORAGE**
VERWENDUNG EINES DOPPELTSCHICHTIGEN PHOTOLITHOGRAPHISCHEN RESISTS ALS NEUES MATERIAL FÜR OPTISCHE SPEICHERUNG
UTILISATION DE RESISTS PHOTOLITHOGRAPHIQUES BICOUCHES EN TANT QUE NOUVEAU MATERIAU POUR LE STOCKAGE OPTIQUE

(30) Priority: 19.12.2002 EP 02080383
(43) Date of publication of application: 21.09.2005
(73) Proprietor: Koninklijke Philips Electronics N.V., 5621 BA Eindhoven (NL)
(72) Inventor: KURT, Ralph, NL-5656 AA Eindhoven (NL); MIJIRITSKII, Andrei, NL-5656 AA Eindhoven (NL)
(74) Representative: Uittenbogaard, Frank
(86) International application number: PCT/IB2003/005410
(87) International publication number: WO 2004/057594

(56) References cited:
- EP-A- 1 130 586
- US-A- 4 587 533
- US-A- 4 682 321
- US-A- 5 458 941
- US-A- 5 796 708
- US-A- 6 033 752

## Description

The invention relates to an optical information storage medium for write-once/read-many. The medium comprises at least one information layer, and a device comprising the information storage medium. The invention further relates to a method for manufacturing such an optical information storage medium and a method of recording and/or reading such an optical information storage medium.

A variety of optical information storage media are well known in the art, particularly in the form of compact disc, CD, and digital versatile disc, DVD, media. A modulated laser beam incident on the record medium induces a change in the optical properties of the information layer. The change may be optically detected later during reading by another laser beam having a lower intensity. For example, CDs typically comprise organic materials with a thin Al-layer resulting in 65% and 5% reflectivity in the as-deposited and exposed states, respectively, giving rise to a modulation of about 60% in a reflected laser beam. The modulation reflects storage units which can be in one state corresponding, e.g., to low reflectivity, and another state corresponding to high reflectivity. In order to use an electromagnetic beam to read or create a specific state of a storage unit, the size of the storage unit cannot be smaller than the spot size during interaction between the electromagnetic beam and the storage unit. The minimum spot size of a laser beam, which is the preferred electromagnetic beam source, is limited by the wavelength of the laser and the numerical aperture of the optics. Thus, in order to increase the density of storage units on the CD-type of optical information storage mediums, the present standard wavelength of 785 nm for CDs and 650 nm for DVDs have to be decreased. In the next generation the blu-ray disc format (BD) will utilize a wavelength of about 405 nm, and furthermore it is expected that future generations will utilize wavelengths in the deep ultra violet range (DUV) of 230-300 nm. The organic materials typically used for optical information storage media degrade over time when exposed to electromagnetic radiation at the BD-wavelength, so that the signal to noise ratio is drastically lowered after, e.g., a couple of hundred read-outs has been performed, and as the wavelength is further decreased the degradation increases. Thus, alternatives have to be developed in order to provide higher storage capacity media of the CD-type than the media that are available today.

In EP 0 474 311 A1 an optical storage device supporting the use of decreased read/write wavelengths, such as 680 nm, is disclosed by using alloying and diffusion. The device utilizes an alloy material as a recording layer. The alloy comprises high reflective materials such as Au, Ag, Al or Cu, and a modulation in reflected light from the device is achieved by thermally imposing geometrical shape changes upon the recording layer by exposing the device to a high intensity laser in a pattern reflecting the recorded data. The modulation is achieved due to this geometrical change. A geometrical configuration of the individual storage units which either possesses a higher reflectivity or a lower reflectivity is created during the exposure. The geometrical shapes of the individual layers thus need to be precisely defined, which may limit the storage density of the optical information storage medium.

Another example of such materials is found in EP 0068801, based on the effect of silicide formation under irradiation. As a rule, optical information media use structural changes in the materials such as change of the crystallographic phase, or difference in the crystalline or amorphous state. With respect to structural phase of the as-deposited, i.e. initial state of the media, the material is transformed into a new material which shows frequently different optical properties, and thereby a modulation is obtained.

The problem of increased material degeneration as the wavelength is decreased is also encountered in miniaturizing lithographic processing for integrated circuit and semiconductor fabrication. In lithographic processes a pattern is first written by means of electromagnetic irradiation in a material which change properties upon exposure to electromagnetic radiation. Typically, after development, the exposed areas (or the non-exposed areas) are removed, and the remaining resist protects parts of the underlying layers during etching of the non-protected underlying layers, so that in a series of steps the pattern (or the inverse) is etched out.

In WO 02/06897 various inorganic materials in a bi-layer configuration are disclosed. It is disclosed that for a large group of inorganic materials, a bi-layer configuration may be thermally melted by means of a laser beam to form an eutectic alloy material possessing different optical properties than the as-deposited materials. To obtain the most suitable resist for lithographic processing, there is a need for a resist transforming at a quite low exposure since current lithographic exposure systems are not designed to provide high exposure and, furthermore, since a significant temperature increase, i.e. above 200 °C, is undesired and eventually damaging for any underlying electronic circuitry.

However, when developing a medium for optical information storage, it is of the utmost importance that the electromagnetic radiation source used for reading the stored information is not altering the material composition of the optical information storage medium.

US 6 033 752 discloses an optical recording medium, comprising a first recording layer containing In and a second recording layer containing an element from group 5B or 6B of the periodic table. Upon irradiation, the materials of the recording layers form an alloy enabling so recording of information.

It is an object of the present invention to provide a high-density optical information storage medium.

It is a still further object of the present invention to provide an optical information storage medium capable of supporting blu-ray disc formats.

It is a still further object of the present invention to provide an optical information storage medium being compatible with standard CD and DVD media.

It is a still further object of the present invention to provide an optical information storage medium which can be recorded and read by radiation in the (deep) ultraviolet range.

It is another object of the present invention to provide a method for manufacturing an optical information storage medium, the method being simple and, furthermore, able to provide a high-density storage medium.

According to a first aspect of the invention, the above mentioned and other objects are fulfilled by an optical information storage medium comprising
- a carrier substrate,
- a reflective information layer being positioned on the carrier substrate and comprising at least a first layer of a first inorganic material in a first structural phase, and at least a second layer of at least a second inorganic material in at least a second structural phase,
- alloy inclusions being formed in the information layer upon exposure to a first electromagnetic radiation and having a structural phase comprising a mixture of the first material in the first structural phase and the at least second material in the at least second structural phase,
wherein the optical properties of the alloy inclusions are different from the optical properties of the as-deposited information layer so that a modulation in electromagnetic radiation reflected from the alloy inclusions and from an area comprising the as-deposited information layer is provided in response to a second electromagnetic radiation being emitted towards the optical information storage medium to provide a read-out signal, characterized in that the storage medium further comprising at least one additional layer positioned between the carrier substrate and the at least first layer, the at least one additional layer comprising at least one sub-layer being a metal.

The optical information storage medium may further be protected by a protective cover layer.

According to a second aspect of the invention, the above mentioned and other objects are fulfilled by a method for manufacturing an optical information storage medium, the method comprising the steps of
- providing a carrier substrate,
- providing a reflective information layer by depositing at least a first layer of a first inorganic material in a first structural phase on the carrier substrate, and depositing at least a second layer of at least a second inorganic material in a second structural phase on the first layer,
- providing at least one additional layer positioned between the carrier substrate and the at least first layer, the at least one additional layer comprising at least one sub-layer being a metal,
- the at least first and second inorganic materials being selected so that a structural phase being formed by melting and solidification of at least a part of the information layer provides alloy inclusions having a structural phase comprising a mixture of the first material in the first structural phase and the second material in the second structural phase.

The optical information storage medium may further be protected by a protective cover layer.

The method may further comprise the step of exposing in a predetermined pattern the information layer to a first electromagnetic radiation so as to form alloy inclusions in the exposed information layer. The exposure may be performed by a focused laser, e.g. in a recording device, where the same laser as used for reading performs the writing, though at a higher energy, or the exposure may be performed in a specific configuration by flood exposure of the storage medium using special masks to provide for exposure in the predetermined pattern.

According to a third aspect of the invention, the above-mentioned and other objects are fulfilled by a method for optically reading an inorganic optical information storage medium, the method comprising the steps of
- emitting an electromagnetic radiation towards the optical information storage medium,
- detecting a phase or intensity modulation in electromagnetic radiation reflected from the optical information storage medium in response to the incoming electromagnetic radiation,
so that a pattern of alloy inclusions in the as-deposited information layer is provided by the detected phase or intensity modulation.

The optical information storage medium, thus, comprises a substrate supporting at least two layers of at least two different inorganic materials wherein the information is stored by thermally melting or liquefying a limited volume of the at least two inorganic materials by means of a first electromagnetic radiation, such as for example a laser beam. Upon melting the at least two inorganic materials form an alloy, preferably an eutectic alloy, which possesses optical properties different from those of the as-deposited materials, thus forming an information pattern. The stored information can afterwards be read, either as an intensity or a phase modulation, in electromagnetic radiation reflected from the medium.

The first and second electromagnetic radiation may be emitted from the same source of radiation, and further have substantially the same wavelength. Preferably, the intensity of the radiation is varied so as to provide a high intensity first electromagnetic radiation (write pulse) for writing and a lower intensity second electromagnetic radiation (read pulse) for reading of the stored information.

The shape of the optical information storage medium is arbitrary. Particularly, the storage medium can be disc, tape, cartridge, card shaped, etc. The term layer is not meant to limit the shape of the information layer to a sheet-like shape common for tapes and discs, but generally refers to any block or shape useful for carrying information.

For example when using discs, such as CDs and DVDs, the carrier substrate is preferably made from a plastic material and has a thickness between 0,5 and 2 mm. The plastic material may comprise any plastic material, such as polymethyl, polymethyl pentene, methacrylate, polyolefin, epoxy, etc., preferably such as polycarbonate.

The protective cover layer may be any material transparent to the electromagnetic radiation employed. In a preferred embodiment polycarbonate is used as protective cover layer, but also other transparent materials such as resin, lacquer, etc. may be used. The cover layer is present both as a mechanical protection layer against scratches etc. and as a chemical protection layer so as to protect the inorganic layers from influence from the environment including the influence from the air. The thickness of the cover layer depends mainly on the working distance between a reading/writing electromagnetic source and the optical information storage medium. The cover layer thickness therefore differs for each generation of optical storage technology. For the Compact Disc, CD, a 1.2 mm thick cover layer is typically used, for the Digital Versatile Disc, DVD, the cover layer is typically 600 µm thick, and for the Blu-ray Disc, BD, the cover layer has a presently preferred thickness of substantially 100 µm. It is envisaged that the protective cover layer may be chosen according to the specific implementation so as to for example be from 50 µm to 200 µm for the BD.

The information layer is the layer actually containing the information and comprises the at least first and second layers of inorganic materials. The information may be written by forming an information pattern by irradiating the information layer by the first electromagnetic radiation. The first electromagnetic radiation has a high writing power and is adapted to heat the information layer so as to at least partly thermally liquefy the inorganic materials. Subsequently, the melted materials solidify to form alloy inclusions in the information layer. The materials, and the ratio of the materials, are selected so that the microstructure of the alloy comprises a mixture of the first inorganic material in the first structural phase and the at least second inorganic material in at least the second structural phase.

The composition of the alloy may be controlled by selection of layer thickness, layer thickness ratio(s), temperature, cool-down temperature, etc. By selection of these parameters according to the phase diagrams for the respective inorganic materials, an eutectic alloy may be formed, e.g. by selecting a proper ratio between the amount of the first and the amount of the at least second inorganic material. This may be obtained by adjusting the thickness of the individual layers accordingly.

It is an advantage of forming an eutectic alloy that the materials form a uniform alloy on the nanometre scale, i.e. an intimate mixture of the first inorganic material in the first phase and the second inorganic material in the second phase, so that no residual parts of the as-deposited materials remain. Deviation from a perfect eutectoid material composition will leave residuals of the as-deposited material in the alloy which may influence the optical properties of the alloy whereby the optical properties of the information layer comprising the alloy inclusions may be less well defined. The remaining residual parts in the alloyed material may thus cause a lower modulation efficiency.

The thicknesses of the at least first and second layers are furthermore selected so as to obtain the best possible reflection of the as-deposited layers, and it is presently preferred that each of the at least two layers has a thickness of about 20 nm. It is to be envisaged that also a thickness of each layer of between 3 and 70 nm may be applied, such as between 10 and 60 nm, such as between 15 and 40 nm. It is presently preferred that the total thickness of the at least two layers should not exceed 200 nm in order to obtain sufficient information density. By increasing the total thickness of the layers, it becomes difficult to limit the heat to the exposed areas and thus avoiding heating of neighbouring parts by, e.g., diffusion into areas not exposed to the first electromagnetic radiation. However, the total thickness of the layers may be limited to 1000 nm, such as to 800 nm, such as to 400 nm, depending on the demands for information density. Due to the deposition processes a minimum layer thickness of about 3 nm is presently preferred for each of the layers.

The inorganic materials may be selected so as to have a low melting point and be able to form a eutectic alloy. The inorganic materials may be selected from the group comprising the pairs: As-Pb, Bi-Cd, Bi-Co, Bi-In, Bi-Pb, Bi-Sn, Bi-Zn, Cd-In, Cd-Pb, Cd-Sb, Cd-Sn, Cd-Ti, Cd-Zn, Ga-In, Ga-Mg, Ga-Sn, Ga-Zn, In-Sn, In-Zn, Mg-Pb, Mg-Sn, Mg-Ti, Pb-Pd, Pb-Pt, Pb-Sb, Sb-Sn, Sb-Ti, Se-Ti, Sn-Ti, Sn-Zn, etc. Presently, the combination of Bi-Co, Bi-In, Bi-Pb, Bi-Sn, Bi-Zn, Ga-In, Ga-Sn, In-Sn, In-Zn, Mg-Sn, Sb-Sn, Sn-Ti, and Sn-Zn, is preferred, and even more preferred is the combination of Bi-In, Bi-Sn, In-Sn.

It is preferred to have the highest possible initial reflectivity of the as-deposited information layer. Having for example two layers of material, it has been found that to obtain maximum reflectivity, the complex refractive indices n_{1,2} ± ik_{1,2} of the first and second inorganic material should be selected so that the second inorganic material has a real part of the refractive index n₂ being as low as possible, and lower than the real part of the refractive index n₁ of the first layer, and furthermore, so that the imaginary part k₂ of the refractive index of the second inorganic material is higher than the imaginary part k₁ of the refractive index of the first material.

The high reflectivity of the as-deposited information layer provides the advantage that the optical information storage device may be read with radiation emitted from standard electromagnetic radiation sources without heating the information layer above a melting threshold.

Furthermore, it has been found that the provision of a highly reflective as-deposited material, i.e. a material having a reflectivity higher than 60 %, such as a reflectivity higher than 70%, such as reflectivity higher than 80 %, provides an unexpectedly high modulation ratio, such as a modulation ratio larger than 50 %, such as larger than 60 %, such as larger than 70 %. The thus strong modulation ratio provides for a high signal to noise ratio increasing the overall performance of the storage device.

It is an important aspect of the optical information storage medium that the optical properties of the as-deposited layers are different from the optical properties of the alloy. Preferably, either the as-deposited layers or the alloy are substantially transparent to the second electromagnetic radiation, whereas the other component is substantially opaque, and preferably highly reflective. In the following embodiment only the situation where the areas comprising the as-deposited layers are substantially opaque, and more specifically where the as-deposited layers are substantially reflective, and where the areas comprising the alloy are substantially transparent, will be described. However, all aspects and embodiments described in the following also apply to the inverse situation.

To read the stored information a second electromagnetic radiation is emitted towards the optical information storage medium and a modulation in a beam of electromagnetic radiation reflected from the optical information storage medium in response to the incident second electromagnetic radiation is detected. The modulation occurs due to the different optical properties of the as-deposited layers and the alloy material. The modulation thus provides a read-out signal providing information about the stored information.

The source of the second electromagnetic radiation may be a laser, such as a diode laser, for example such as a laser emitting light in the wavelength range 500 to 900 nm, including standard wavelengths at 785 nm and 650 nm used in the CD and DVD technologies, respectively. The radiation source may furthermore be a laser source emitting light in the wavelength range considered blue, i.e. in the wavelength range between 300 and 500 nm, preferably such as about 405 nm which may be used in BD technology, or the radiation source may be an ultraviolet laser source, emitting radiation in the 230 to 300 nm range.

In a preferred embodiment, the source of the first and second electromagnetic radiation is the same source, the energy of the emitted radiation being smaller for the read radiation than for the write radiation.

The read signal may be provided by detecting electromagnetic radiation reflected from the optical information storage medium upon emission of second electromagnetic radiation towards at least a part of the optical information storage medium and the information stored in the information pattern may thus be read as an intensity modulation in the detected electromagnetic radiation. The information stored in the information pattern may be read as an intensity modulation in radiation reflected from the as-deposited information layer or from any layer beneath the at least partly transparent alloy inclusions.

Alternatively, the read signal may be provided by detecting interference modulations or interference fringes in the electromagnetic radiation reflected from the optical information storage medium upon emission of second electromagnetic radiation towards at least a part of the optical information storage medium, so that a phase modulation is detected. The incident electromagnetic radiation is thus reflected from the as-deposited layers and from any layer beneath the alloy inclusions, for example the carrier substrate, an additional layer, etc. The carrier substrate material may be chosen to be sufficiently reflective so as to provide a detectable reflected signal from beneath the alloy. In this embodiment, it is important that the distance between the surface of the as-deposited layer, and the surface of any reflecting layer beneath the alloy is adjusted so that destructive or constructive interference is obtained between the radiation reflected from the surface of the as-deposited layer and from the surface of the reflective layer beneath the alloy. In order to obtain a correct distance between the two reflective layers the thickness of the first and second layers should be selected to be any integer multiple of a quarter of a wavelength of the second electromagnetic radiation. Since the thickness of the first and second layers are carefully selected in respect of reflectivity and alloy composition, it may be desirable to provide a spacer layer to adjust said distance. Above it has been assumed that the second electromagnetic radiation is emitted towards the optical information storage medium so that the direction of the radiation is parallel to the direction of the surface normal of the optical information storage medium. In the case where the direction of the second electromagnetic radiation is tilted an angle, θ, away from the surface normal of the optical information storage medium, the thickness of the inorganic bi-layer, or the thickness of the inorganic bi-layer and a spacer layer should be selected so that the total thickness fulfils: n · 1 · sin(θ) = 1/4 · m · λ, where n · 1 is the total optical thickness, θ the tilt angle, λ the wavelength of the second electromagnetic radiation and m any integer number. However, in practice also track and focus signals have to be considered. In order to read out these signals with the same optics as the optics for reading the medium, most often not complete interference is chosen, so that only parameters close to the optimum situation are selected.

To improve the modulation and to enhance the optical and thermal properties of the storage medium the information layer further comprises an additional layer. The additional layer may be provided on either one or both sides of the information layer, i.e. between the carrier substrate and the first layer, or it may be provided on top of the information layer. The additional layer may be adapted to reflect, absorb or diffuse, e.g., the second electromagnetic radiation being emitted towards the additional layer through the alloy. The optical properties of the additional layer may be decisive for the type as well as the strength of the modulation obtained.

To improve the reflectivity of the layer beneath the alloy, a reflective additional layer may be provided between the carrier substrate and the at least first layer. Hereby, the intensity of the reflected radiation from beneath the alloy may be increased so as to further increase the sensitivity of the phase modulation.

The reflective additional layer may be any reflective material, such as a metal or a metal alloy. The metal layer preferably comprises Al, but it may also comprise Ag, Au, Pd, Pt, Ir, Cu or any other high reflective metal or metal alloy.

It is a further advantage of using an additional layer that the additional layer may comprise a heat conducting material, such as a metal, whereby thermal heating due to the incoming electromagnetic radiation is spread out very fast so as to avoid melting of neighbouring layers. It may be an advantage of using an additional layer of Al since the interface between Al and Bi or between Al and Sn is very stable. In the expected (local) temperature range no diffusing and unwanted alloying between Al and Bi or Sn is expected to occur.

Alternatively, the additional layer may comprise a dielectric layer reflecting the incoming radiation. The dielectric layer may be a mixture of ZnS and SiO₂, e.g. (ZnS)₈₀(SiO₂)₂₀ or the dielectric layers may comprise SiO₂,Ta₂O₅, TiO₂, Si₃N₄, AlN, Al₂O₃, ZnO, SiC, etc., including their non-stoichiometric compositions. The dielectric layers may further, or alternatively, comprise a dielectric stack, such as a stack comprising a plurality of sub-layers. The dielectric stack is preferably a so-called interference stack where the reflectivity may be tailored by tailoring the number of sub-layers as well as the thickness of the individual sub-layers. Furthermore, more dielectric stacks may be provided to further increase the storage density.

Typically, dielectric materials are poor heat conducting materials. A dielectric additional layer may thereby confine the thermal heat from the first electromagnetic radiation to the focusing area of the beam, which may enhance the contrast between the as-deposited areas and the exposed areas enabling a high-density pattern to be formed.

The additional layer may also comprise the spacer layer mentioned above, i.e. the layer to adjust the distance between surface of the as-deposited layer and the surface of the additional layer. The spacer layer may be a transparent layer positioned so that radiation can pass through the layer, or the spacer layer may be opaque in which situation it is necessary to position the spacer layer so that radiation need not pass through it. The spacer layer may therefore be positioned anywhere it is convenient in order to optimize the performance of the optical information storage medium.

In another alternative, the additional layer may be chosen to absorb or diffuse incoming radiation, so that radiation is reflected from the areas comprising the as-deposited first and second layers and not, or only to a small extent, from the areas comprising the alloy. Such an additional layer may, like the reflecting material, be made from a dielectric material or a stack of dielectric materials, so that the incoming radiation is absorbed or diffused. A material absorbing the incoming radiation may be any absorbing material, such as any absorbing dielectric material, such as carbon black, diamond like-carbon (DLC), Fe₃O₄, Pb, amorphous silicon, spinel, etc. A material diffusing the incoming radiation may be a porous silicon, Al₂O₃, SiO₃, etc. Preferably, the materials for diffusing the incoming radiation are all granular structures. In both cases substantially no radiation is reflected from the layer, i.e. from the areas comprising the alloy so that the intensity modulation may be further improved.

In order to further increase the capacity of the optical information storage medium the layered structure as described may be repeated so that two or more recording stacks are obtained. The recording stack to be read or written can be chosen by changing the focusing of the second electromagnetic radiation so that the radiation source emitting the first or the second electromagnetic radiation is focussed in the recording stack which is read from/written to, cf. WO99/59143.

In another preferred embodiment a dual or multi-information layer configuration is proposed, in which each information layer is built up according to the invention.

In order to further reduce cross-talk and self-absorption between two layers it is now proposed to deposit the information layers comprising the first and second inorganic materials only in predetermined tracks, whereas the space between the tracks are typically left transparent. This improves the visibility of any tracks lying underneath, and to increase the storage density a second information layer may be provided beneath the first information layer and arranged so that the space between tracks in top layer is positioned on top of tracks in the lower layer. Such structures may be provided by lift-off techniques.

In addition to the aforementioned option of increasing the data capacity by using two recording stacks on top of each other, another possibility is to provide the same stack on both sides of a disc, or even to coat a double stacking on both sides of a disc to even further increase the data capacity. Writing and reading would in this case need two write/read units or the medium has to be turned to its opposite side manually used, e.g., for LPs.

A preferred embodiment of the invention will now be described in details with reference to the drawing in which:
Fig. 1 shows a side view of an optical information storage medium,
Fig. 2 shows the as-deposited reflectivity, transmission and absorption at 405 nm for different layer thicknesses of In and Bi,
Fig. 3 shows the as-deposited reflectivity, transmission and absorption at 405 nm for different layer thicknesses of Sn and Bi,
Fig. 4 shows the as-deposited reflectivity, transmission and absorption at 405 nm for different layer thicknesses of In and Sn,
Fig. 5 shows the binary phase diagram for Bi and In,
Fig. 6 shows the binary phase diagram for Bi and Sn,
Fig. 7 shows the binary phase diagram for In and Sn,
Fig. 8 shows measured optical properties of different layers during heating.

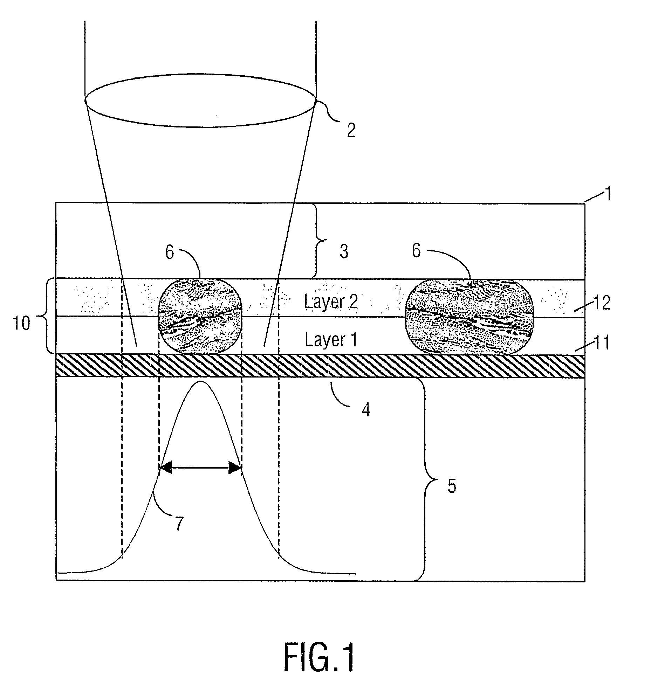

In Fig. 1 a preferred embodiment of the optical information storage medium is shown. The optical information storage medium 1 comprises a carrier substrate being a polycarbonate substrate 5 having a thickness of about 1 mm, first layer 11 and second layer 12 form together an information layer 10. A transparent polycarbonate cover layer 3 is added for protection purposes. A laser is schematically illustrated by a lens 2. The laser could either be a write laser forming alloy inclusions 6 by thermally heating the bi-layer, liquefying it and subsequently formation of the alloy inclusion. The laser could also be a read laser detecting the presence of a pre-created alloy inclusion. Also shown is the position of an additional layer 4.

The initial as-deposited reflectivity of a layer stack design is an important parameter for optical storage. For the three generation of optical storage technology (CD, DVD and BD) the as-deposited reflectivity has been calculated for the following configurations:

| Configuration | layer 1 | layer 2 |
|---|---|---|
| A | 60 nm In | 60nmBi |
| B | 60 nm Bi | 60 nm In |
| C | 60 nm Sn | 60 nm Bi |
| D | 60 nm Bi | 60 nm Sn |
| E | 60 nm In | 60 nm Sn |
| F | 60 nm Sn | 60 nm In |

The specific layer thickness was chosen in order to reach maximum reflectivity but may be lowered somewhat to fulfil any specification requirements. The results of the calculation are given in Tab. 1 showing a high reflectivity for all configurations. A comparison shows that the configurations A, C and E show the highest initial reflectivity.

**Tab. 1. Calculated reflectivity of stack with as-deposited bi-layer**

| Configuration | Name | Wavelength | Calculated reflectivity |
|---|---|---|---|
| A | CD | 785 nm | 89.4 % |
| B | CD | 785 nm | 79.4 % |
| C | CD | 785 nm | 79.9 % |
| D | CD | 785 nm | 79.4 % |
| | | | |
| A | DVD | 650 nm | 85.1 % |
| B | DVD | 650 nm | 64.8 % |
| C | DVD | 650nm | 70.1 % |
| D | DVD | 650 nm | 64.9 % |
| | | | |
| A | BD | 405 nm | 89.0 % |
| B | BD | 405 nm | 62.1 % |
| C | BD | 405 nm | 72.3 % |
| D | BD | 405 nm | 62.1 % |
| E | BD | 405 nm | 89.0 % |
| F | BD | 405 nm | 72.3 % |

For instance, configuration A shows higher reflectivity than configuration B which comprises the same materials but in reverse order. Assuming that initial reflectivity is the major requirement for optical storage, configuration A would be preferred. However the total reflectivity is not necessarily the main issue with respect to all aspects.

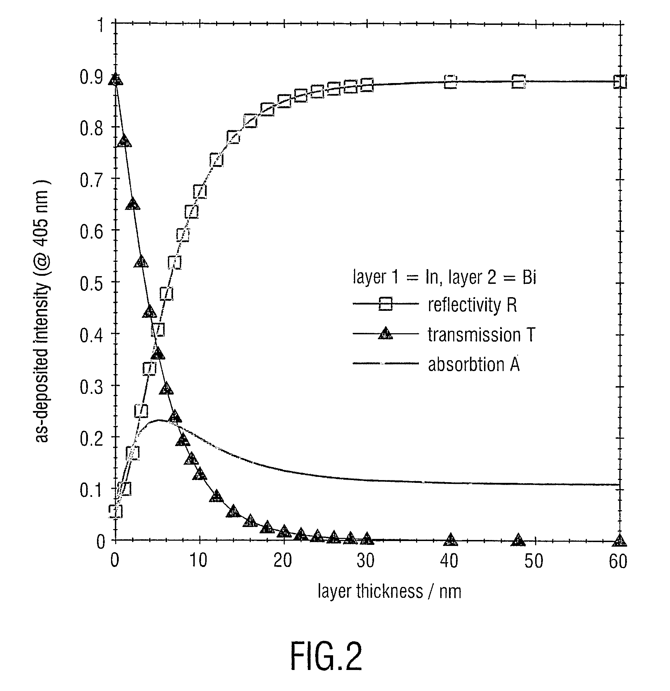

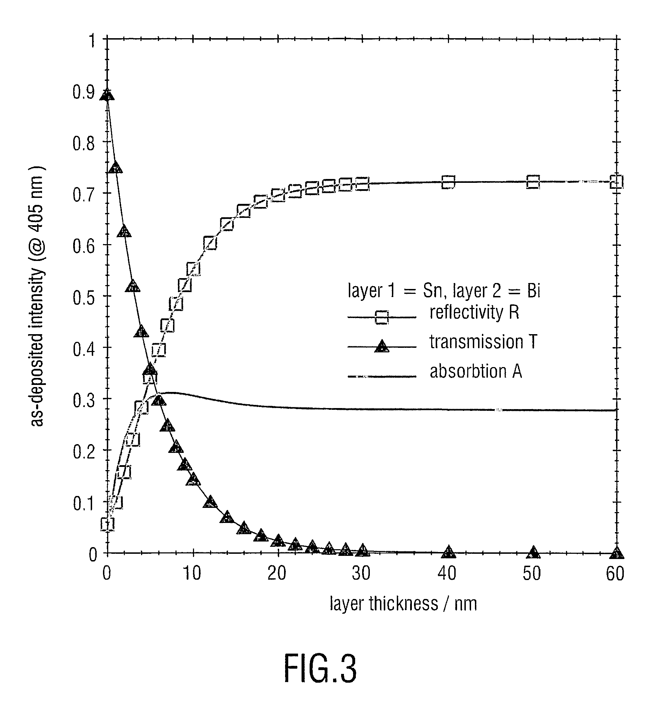

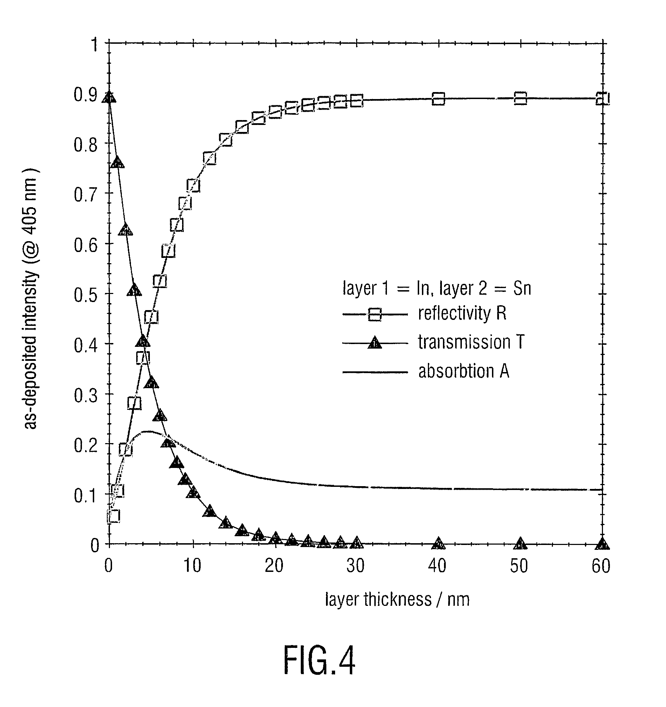

In Fig. 2, 3 and 4 the initial reflectivity was calculated for configuration A, C and E, respectively, assuming equal thickness of the two layers forming the bi-layer. It is easily seen that that approximately at a layer thickness of 20 nm of each layer the maximum reflectivity is reached.

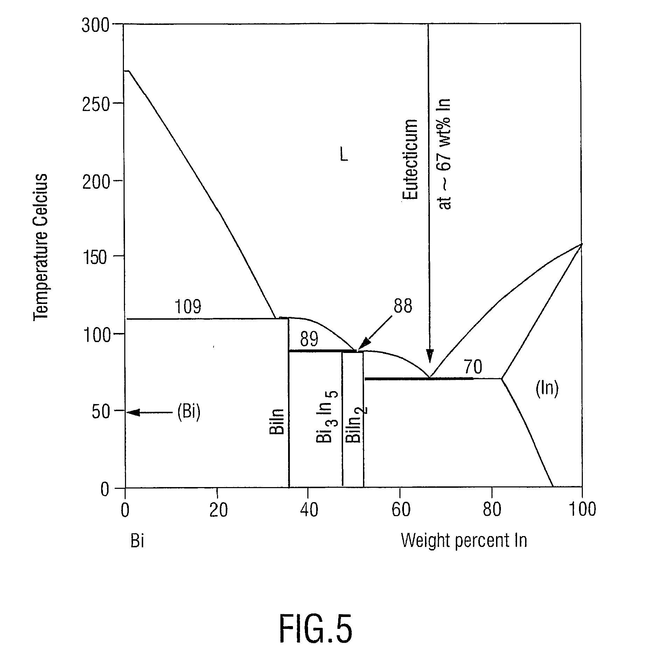

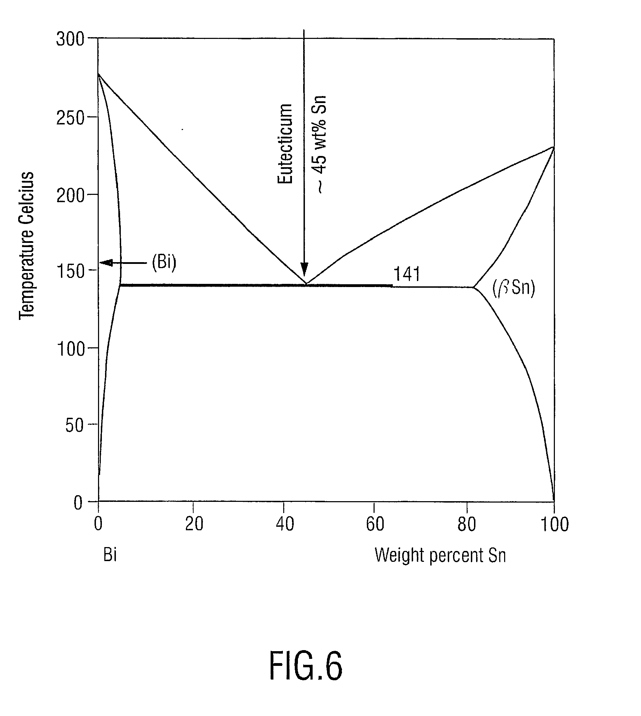

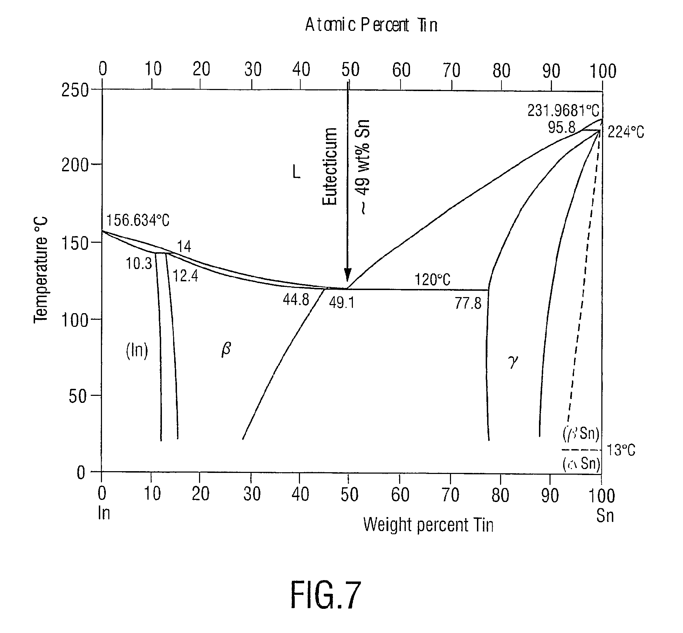

In Fig. 5, 6 and 7 binary phase diagrams are shown. Up to now, only bi-layer with equal thickness were considered, however the thickness ratio of the two layers is important in order to form an eutectic alloy upon melting the two layers. Formation of a substantial eutectic alloy is important for the optical performance. The binary phase diagrams give information at which ratio (in weight percent) but also at which cool-down temperature an eutectic alloy is formed. Tab. 2 gives an overview of the ratio of the individual as-deposited layers in order to reach the eutecticum.

**Tab. 2. Eutectic compositions**

| System | Weigh-% | Atomic-% | Thickness ratio |
|---|---|---|---|
| In-Bi | 67 wt% In | 78 at% In | 30 nm In : 11.1 nm Bi |
| Sn-Bi | 45 wt% Sn | 59 at% Sn | 30 nm Sn : 27.4 nm Bi |
| In-Sn | 52 wt% In | 51 at% In | 30 nm In : 27.7 nm Sn |

For example, by having a film composition 15 nm/15 nm Bi/In and a 50 nm/50 nm Bi/In bi-layer the optical properties are strongly changed. Typically, the change is represented by the optical density (OD) meaning transmission T = 10 -OD of the film versus the read-out wavelength. At a wavelength of 405 nm, the as-deposited film may have an OD of 1 or 4 depending on the layer thickness. By alloying areas in the film, the OD of the converted area, the alloy inclusions, reach a minimum wherein all the material in the film is converted. At 405 nm a minimum value of roughly 0.4 OD is reached. This change in OD ranging from 0.6 up to 3.6 (as a function of layer thickness) means more than a factor of 10 in terms of transmitted light power (significant part of the modulation). Combined with the high initial reflectivity, it gives the advantage of the proposed material: high contrast + high initial reflectivity, which also means lower signal noise. Furthermore, the smooth and flat absorption spectrum over a long range of wavelength is remarkable, as well as, underlying its potential for becoming interesting for all generations of optical storage technology.

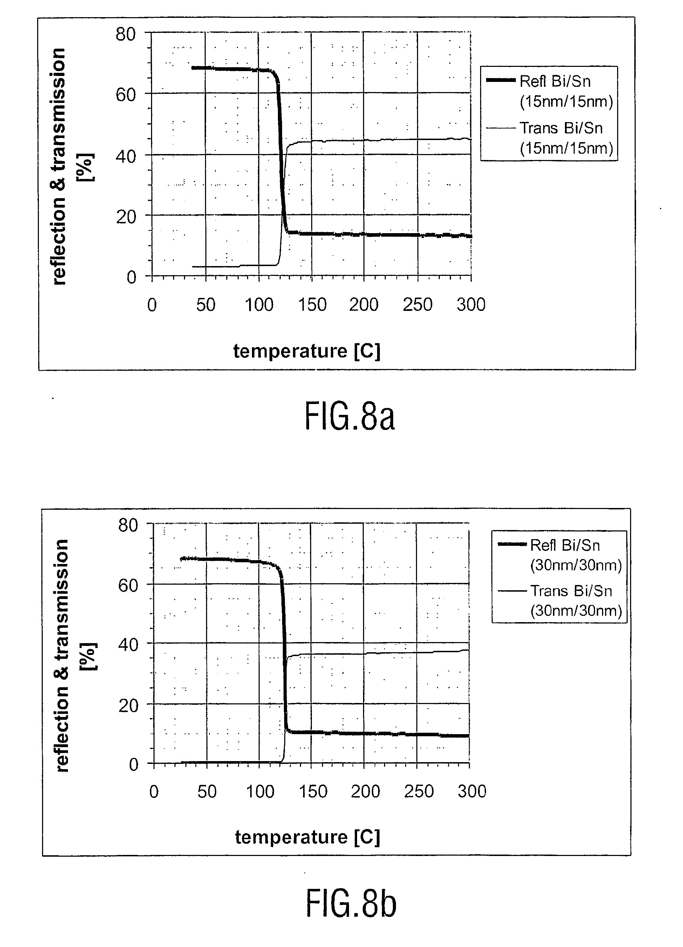

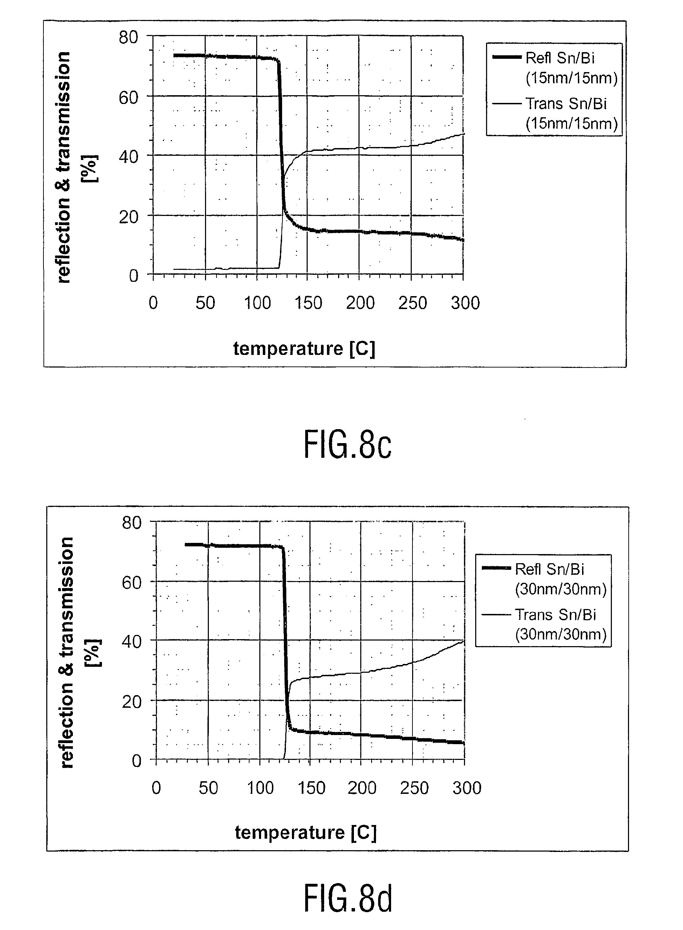

Fig. 8 shows optical performance for a number of different configurations as a function of the temperature during heating up. In accordance with the calculations a high initial reflectivity (about 70 %) is observed. At about 130 °C a sharp transition is observed resulting in a dramatic drop of the reflectivity (below 15 %) and a corresponding increase of transmission to about 40 %.

## Claims

1. An optical information storage medium (1) comprising
- a carrier substrate (5),
- a reflective information layer (10) being positioned on the carrier substrate (5) and comprising at least a first layer (11) of a first inorganic material in a first structural phase, and at least a second layer (12) of at least a second inorganic material in at least a second structural phase,
- alloy inclusions (6) being formed in the information layer (10) upon exposure to a first electromagnetic radiation and having a structural phase comprising a mixture of the first material in the first structural phase and the at least second material in the at least second structural phase,
wherein the optical properties of the alloy inclusions are different from the optical properties of the as-deposited information layer so that a modulation in electromagnetic radiation reflected from the alloy inclusions and from an area comprising the as-deposited information layer, respectively, is provided in response to a second electromagnetic radiation being emitted towards the optical information storage medium (1) to provide a read-out signal, **characterized in that** the storage medium further comprising at least one additional layer (4) positioned between the carrier substrate and the at least first layer (11), the at least one additional layer (4) comprising at least one sub-layer being a metal.

2. A medium according to claim 1, wherein the inorganic materials at least comprises materials being selected from the group consisting of the pairs: As-Pb, Bi-Cd, Bi-Co, Bi-In, Bi-Pb, Bi-Sn, Bi-Zn, Cd-In, Cd-Pb, Cd-Sb, Cd-Sn, Cd-Ti, Cd-Zn, Ga-In, Ga-Mg, Ga-Sn, Ga-Zn, In-Sn, In-Zn, Mg-Pb, Mg-Sn, Mg-Ti, Pb-Pd, Pb-Pt, Pb-Sb, Sb-Sn, Sb-Ti, Se-Ti, Sn-Ti, and Sn-Zn.

3. A medium according to claim 1 or 2, wherein the inorganic materials at least comprises materials being selected from the group consisting of the pairs: Bi-Co, Bi-In, Bi-Pb, Bi-Sn, Bi-Zn, Ga-In, Ga-Sn, In-Sn, In-Zn, Mg-Sn, Sb-Sn, Sn-Ti, and Sn-Zn.

4. A medium according to any of the preceding claims, wherein the inorganic materials at least comprises the combination of Bi-In, Bi-Sn, In-Sn.

5. A medium according to any of the preceding claims, wherein each inorganic material has a complex refractive index n ± ik and wherein the second inorganic material is selected to have a real part of the refractive index lower than the real part of the refractive index of the first material and an imaginary part of the refractive index higher than the imaginary part of the refractive index of the first material.

6. A medium according to any of the preceding claims wherein the first inorganic material forming the first layer (11) is Bi and the second inorganic material forming the second layer (12) is In or Sn, or wherein the first inorganic material is Sn and the second inorganic material is In.

7. A medium according to any of the preceding claims, wherein the thickness of the first and second layers (11, 12) are selected so that an alloy formed by melting and solidifying of at least a part of the first and second layers has a substantially eutectic composition.

8. A medium according to claim 1, wherein the alloy (6) or the as-deposited information layer (10) are substantially transparent to the second electromagnetic radiation emitted towards the medium.

9. A medium according to claim 8, wherein the at least one additional layer (4) is adapted to reflect, absorb or diffuse the second electromagnetic radiation being emitted towards the additional layer.

10. A medium according to any of claim 8-9, wherein the at least one additional layer (4) comprises at least one sub-layer comprising a dielectric material.

11. A medium according to any of claims 8-10, wherein the at least one additional layer (4) comprises at least one transparent spacer layer.

12. A medium according to claim 1, wherein the medium further comprises a protective cover layer (3).

13. A medium according to any of the preceding claims, wherein the modulation in reflected electromagnetic radiation between an area comprising the alloy and an area comprising the as-deposited layer is larger than 70%.

14. A medium according to any of the preceding claims, wherein the modulation is an intensity modulation or a phase modulation.

15. A medium according to any of the preceding claims wherein the medium is compatible with CD and DVD standards.

16. The use of a medium according to any of claims 1-15 in an optical information reading and/or recording device.

17. An optical information storage medium comprising
- a carrier substrate (5),
- a first recording stack comprising
- a reflective information layer (10) comprising at least a first layer (11) of a first inorganic material in a first structural phase, and at least a second layer (12) of at least a second inorganic material in at least a second structural phase, at least one additional layer (4) positioned between the carrier substrate and the at least first layer (11), the at least one additional layer (4) comprising at least one sub-layer being a metal,
- alloy inclusions (6) being formed in the information layer (10) and having a structural phase comprising a mixture of the first material in the first structural phase and the at least second material in the at least second structural phase,
- a separation layer,
- a second recording stack substantial identical to the first recording stack.

18. A method for manufacturing an optical information storage medium (1), the method comprising the steps of
- providing a carrier substrate (5),
- providing a reflective information layer (10) by depositing at least a first layer (11) of a first inorganic material in a first structural phase on the carrier substrate, and depositing at least a second layer (12) of at least a second inorganic material in a second structural phase on the first layer,
- providing at least one additional layer (4) positioned between the carrier substrate and the at least first layer (11), the at least one additional layer (4) comprising at least one sub-layer being a metal,
- the at least first and second inorganic materials being selected so that a structural phase being formed by melting and solidification of at least a part of the information layer provides alloy inclusions (6) having a structural phase comprising a mixture of the first material in the first structural phase and the second material in the second structural phase.

19. A method according to claim 18, further comprising the step of exposing in a predetermined pattern the information layer to a first electromagnetic radiation so as to form alloy inclusions in the exposed information layer.

20. An optical information storage medium being provided by the method of claims 18-19.

21. A method for optically reading an optical information storage medium according to any of claims 1-15, the method comprising the steps of
- emitting an electromagnetic radiation towards the optical information storage medium,
- detecting a phase or intensity modulation in electromagnetic radiation reflected from the optical information storage medium in response to the incoming electromagnetic radiation,
so that a pattern of alloy inclusions in the as-deposited information layer is provided by the detected phase or intensity modulation.

## Patentansprüche

1. Optisches Informationsspeichermedium (1) mit
- einem Trägersubstrat (5),
- einer reflektiven Informationsschicht (10), welche auf dem Trägersubstrat (5) angeordnet ist und mindestens eine erste Schicht (11) aus einem ersten anorganischen Material in einer ersten strukturellen Phase und mindestens eine zweite Schicht (12) aus mindestens einem zweiten anorganischen Material in mindestens einer zweiten strukturellen Phase aufweist,
- Legierungseinschlüssen (6), welche in der Informationsschicht (10) bei Aussetzen einer ersten elektromagnetischen Strahlung gebildet werden und eine strukturelle Phase mit einem Gemisch aus dem ersten Material in der ersten strukturellen Phase und dem mindestens zweiten Material in der mindestens zweiten strukturellen Phase aufweisen,
wobei die optischen Eigenschaften der Legierungseinschlüsse sich von den optischen Eigenschaften der unbehandelten ("as-deposited") Informationsschicht unterscheiden, so dass eine Modulation der von den Legierungseinschlüssen und von einer Fläche mit der unbehandelten Informationsschicht reflektierten, elektromagnetischen Strahlung in Reaktion auf eine zweite elektromagnetische Strahlung, welche zu dem optischen Informationsspeichermedium (1) hin emittiert wird, um ein Auslesesignal zu liefern, vorgesehen wird, **dadurch gekennzeichnet, dass** das Speichermedium weiterhin mindestens eine zusätzliche Schicht (4) aufweist, welche zwischen dem Trägersubstrat und der mindestens ersten Schicht (11) angeordnet ist, wobei die mindestens eine zusätzliche Schicht (4) mindestens eine Unterschicht aufweist, welche aus einem Metall besteht.

2. Medium nach Anspruch 1, wobei die anorganischen Materialien zumindest Materialien enthalten, welche aus der Gruppe, der die Paare As-Pb, Bi-Cd, Bi-Co, Bi-In, Bi-Pb, Bi-Sn, Bi-Zn, Cd-In, Cd-Pb, Cd-Sb, Cd-Sn, Cd-Ti, Cd-Zn, Ga-In, Ga-Mg, Ga-Sn, Ga-Zn, In-Sn, In-Zn, Mg-Pb, Mg-Sn, Mg-Ti, Pb-Pd, Pb-Pt, Pb-Sb, Sb-Sn, Sb-Ti, Se-Ti, Sn-Ti, und Sn-Zn angehören, ausgewählt werden.

3. Medium nach Anspruch 1 oder 2, wobei die anorganischen Materialien zumindest Materialen enthalten, welche aus der Gruppe, der die Paare Bi-Co, Bi-In, Bi-Pb, Bi-Sn, Bi-Zn, Ga-In, Ga-Sn, In-Sn, In-Zn, Mg-Sn, Sb-Sn, Sn-Ti, und Sn-Zn angehören, ausgewählt werden.

4. Medium nach einem der vorangegangenen Ansprüche, wobei die anorganischen Materialien zumindest die Kombination aus Bi-In, Bi-Sn, In-Sn enthalten.

5. Medium nach einem der vorangegangenen Ansprüche, wobei jedes anorganische Material einen komplexen Brechungsindex n ± ik aufweist, und wobei das zweite anorganische Material so ausgewählt wird, dass es einen Realteil des Brechungsindex, welcher geringer als der Realteil des Brechungsindex des ersten Materials ist, und einen Imaginärteil des Brechungsindex, welcher höher als der Imaginärteil des Brechungsindex des ersten Materials ist, aufweist.

6. Medium nach einem der vorangegangenen Ansprüche, wobei das erste anorganische Material, welches die erste Schicht (11) bildet, Bi ist und das zweite anorganische Material, welches die zweite Schicht (12) bildet, In oder Sn ist, oder wobei das erste anorganische Material Sn und das zweite anorganische Material In ist.

7. Medium nach einem der vorangegangenen Ansprüche, wobei die Dicke der ersten und zweiten Schicht (11, 12) so gewählt wird, dass eine Legierung, welche durch Schmelzen und Verfestigung von mindestens einem Teil der ersten und zweiten Schicht gebildet wird, eine substanziell eutektische Zusammensetzung aufweist.

8. Medium nach Anspruch 1, wobei die Legierung (6) oder die unbehandelte Informationsschicht (10) substanziell durchlässig für die zweite elektromagnetische Strahlung ist, welche zu dem Medium hin emittiert wird.

9. Medium nach Anspruch 8, wobei die mindestens eine zusätzliche Schicht (4) die zweite elektromagnetische Strahlung, welche zu der zusätzlichen Schicht hin emittiert wird, reflektieren, absorbieren oder streuen kann.

10. Medium nach Anspruch 8 oder 9, wobei die mindestens eine zusätzliche Schicht (4) mindestens eine Unterschicht aufweist, welche ein dielektrisches Material enthält.

11. Medium nach einem der Ansprüche 8 bis 10, wobei die mindestens eine zusätzliche Schicht (4) mindestens eine lichtdurchlässige Abstandsschicht aufweist.

12. Medium nach Anspruch 1, wobei das Medium weiterhin eine Deckschutzschicht (3) aufweist.

13. Medium nach einem der vorangegangenen Ansprüche, wobei die Modulation der reflektierten, elektromagnetischen Strahlung zwischen einer Fläche mit der Legierung und einer Fläche mit der unbehandelten Schicht größer als 70% ist.

14. Medium nach einem der vorangegangenen Ansprüche, wobei die Modulation eine Intensitätsmodulation oder eine Phasenmodulation ist.

15. Medium nach einem der vorangegangenen Ansprüche, wobei das Medium mit CD- und DVD-Standard kompatibel ist.

16. Verwendung eines Mediums nach einem der Ansprüche 1 bis 15 in einer optischen Informationslese- und/oder Aufzeichnungsvorrichtung.

17. Optisches Informationsspeichermedium mit
- einem Trägersubstrat (5),
- einem ersten Aufzeichnungsstapel mit
- einer reflektiven Informationsschicht (10) mit mindestens einer ersten Schicht (11) aus einem ersten anorganischen Material in einer ersten strukturellen Phase und mindestens einer zweiten Schicht (12) aus mindestens einem zweiten anorganischen Material in mindestens einer zweiten strukturellen Phase, wobei mindestens eine zusätzliche Schicht (4) zwischen dem Trägersubstrat und der mindestens ersten Schicht (11) positioniert ist, wobei die mindestens eine zusätzliche Schicht (4) mindestens eine Unterschicht, welche aus einem Metall besteht, aufweist,
- Legierungseinschlüssen (6), welche in der Informationsschicht (10) ausgebildet sind und eine strukturelle Phase mit einem Gemisch aus dem ersten Material in der ersten strukturellen Phase und dem mindestens zweiten Material in der mindestens zweiten strukturellen Phase aufweisen,
- einer Trennschicht,
- einem zweiten Aufzeichnungsstapel, welcher mit dem ersten Aufzeichnungsstapel im Wesentlichen identisch ist.

18. Verfahren zur Herstellung eines optischen Informationsspeichermediums (1), wonach
- ein Trägersubstrat (5) vorgesehen wird,
- eine reflektive Informationsschicht (10) vorgesehen wird, indem mindestens eine erste Schicht (11) aus einem ersten anorganischen Material in einer ersten strukturellen Phase auf dem Trägersubstrat und mindestens eine zweite Schicht(12) aus mindestens einem zweiten anorganischen Material in einer zweiten strukturellen Phase auf der ersten Schicht aufgebracht werden,
- mindestens eine zusätzliche Schicht (4), welche sich zwischen dem Trägersubstrat und der mindestens ersten Schicht (11) befindet, vorgesehen wird, wobei die mindestens eine zusätzliche Schicht (4) mindestens eine Unterschicht, welche aus einem Metall besteht, aufweist,
- das mindestens erste und zweite anorganische Material so ausgewählt werden, dass eine strukturelle Phase, welche durch Schmelzen und Festwerden von zumindest einem Teil der Informationsschicht gebildet wird, Legierungseinschlüsse (6) vorsieht, welche eine strukturelle Phase mit einem Gemisch aus dem ersten Material in der ersten strukturellen Phase und dem zweiten Material in der zweiten strukturellen Phase aufweisen.

19. Verfahren nach Anspruch 18, wonach weiterhin die Informationsschicht in einer vorgegebenen Struktur einer ersten elektromagnetischen Strahlung ausgesetzt wird, um Legierungseinschlüsse in der strahlenexponierten Informationsschicht auszubilden.

20. Optisches Informationsspeichermedium, welches durch das Verfahren nach den Ansprüchen 18 und 19 vorgesehen wird.

21. Verfahren zum optischen Lesen eines optischen Informationsspeichermediums nach einem der Ansprüche 1 bis 15, wonach
- eine elektromagnetische Strahlung zu dem optischen Informationsspeichermedium hin emittiert wird,
- eine Phasen- oder Intensitätsmodulation der elektromagnetischen Strahlung, welche von dem optischen Informationsspeichermedium in Reaktion auf die eingehende, elektromagnetische Strahlung reflektiert wird, ermittelt wird,
so dass eine Legierungseinschlussstruktur in der unbehandelten Informationsschicht durch die ermittelte Phasen- oder Intensitätsmodulation vorgesehen ist.

## Revendications

1. Support de stockage optique d'informations (1) qui comprend
- un substrat porteur (5),
- une couche d'informations réfléchissante (10) qui est positionnée sur le substrat porteur (5) et qui comprend au moins une première couche (11) d'un premier matériau inorganique dans une première phase de structure, et au moins une deuxième couche (12) d'au moins un deuxième matériau inorganique dans au moins une deuxième phase de structure,
- des inclusions d'alliage (6) étant formées dans la couche d'informations (10) lors d'une exposition à un premier rayonnement électromagnétique, qui ont une phase de structure qui comprend un mélange du premier matériau dans la première phase de structure et du au moins un deuxième matériau dans la au moins une deuxième phase de structure,
dans lequel les propriétés optiques des inclusions d'alliage sont différentes des propriétés optiques de la couche d'informations telle que déposée, de façon qu'une modulation d'un rayonnement électromagnétique réfléchi respectivement à partir des inclusions d'alliage et à partir d'une zone qui comprend la couche d'informations telle que déposée est procurée en réponse à un deuxième rayonnement électromagnétique qui est émis vers le support de stockage optique d'informations (1) pour procurer un signal de lecture, **caractérisé en ce que** le support de stockage comprend en outre au moins une couche additionnelle (4) positionnée entre le substrat porteur et la au moins une première couche (11), la au moins une couche additionnelle (4) comprenant au moins une sous-couche qui est un métal.

2. Support selon la revendication 1, dans lequel les matériaux inorganiques comprennent au moins des matériaux sélectionnés dans le groupe composé des paires : As-Pb, Bi-Cd, Bi-Co, Bi-In, Bi-Pb, Bi-Sn, Bi-Zn, Cd-In, Cd-Pb, Cd-Sb, Cd-Sn, Cd-Ti, Cd-Zn, Ga-In, Ga-Mg, Ga-Sn, Ga-Zn, In-Sn, In-Zn, Mg-Pb, Mg-Sn, Mg-Ti, Pb-Pd, Pb-Pt, Pb-Sb, Sb-Sn, Sb-Ti, Se-Ti, Sn-Ti et Sn-Zn.

3. Support selon la revendication 1 ou 2, dans lequel les matériaux inorganiques comprennent au moins des matériaux sélectionnés dans le groupe composé des paires : Bi-Co, Bi-In, Bi-Pb, Bi-Sn, Bi-Zn, Ga-In, Ga-Sn, In-Sn, In-Zn, Mg-Sn, Sb-Sn, Sn-Ti et Sn-Zn.

4. Support selon une quelconque des revendications précédentes, dans lequel les matériaux inorganiques comprennent au moins la combinaison de Bi-In, Bi-Sn, In-Sn.

5. Support selon une quelconque des revendications précédentes, dans lequel chaque matériau inorganique a un indice de réfraction complexe n ± ik et dans lequel le deuxième matériau inorganique est sélectionné pour avoir une partie réelle de l'indice de réfraction inférieure à la partie réelle de l'indice de réfraction du premier matériau, et une partie imaginaire de l'indice de réfraction supérieure à la partie imaginaire de l'indice de réfraction du premier matériau.

6. Support selon une quelconque des revendications précédentes, dans lequel le premier matériau inorganique formant la première couche (11) est Bi et le deuxième matériau inorganique formant la deuxième couche (12) est In ou Sn, ou dans lequel le premier matériau inorganique est Sn et le deuxième matériau inorganique est In.

7. Support selon une quelconque des revendications précédentes, dans lequel les épaisseurs des première et deuxième couches (11, 12) sont sélectionnées de façon qu'un alliage formé par fusion et solidification d'au moins une partie des première et deuxième couches ait une composition essentiellement eutectique.

8. Support selon la revendication 1, dans lequel l'alliage (6) ou la couche d'informations (10) telle que déposée sont essentiellement transparents pour le deuxième rayonnement électromagnétique émis en direction du support.

9. Support selon la revendication 8, dans lequel la au moins une couche additionnelle (4) est à même de réfléchir, absorber ou diffuser le deuxième rayonnement électromagnétique émis en direction de la couche additionnelle.

10. Support selon une quelconque des revendications 8 ou 9, dans lequel la au moins une couche additionnelle (4) comprend au moins une sous-couche qui comprend un matériau diélectrique.

11. Support selon une quelconque des revendications 8 à 10, dans lequel la au moins une couche additionnelle (4) comprend au moins une couche d'espacement transparente.

12. Support selon la revendication 1, dans lequel le support comprend en outre une couche de couverture protectrice (3).

13. Support selon une quelconque des revendications précédentes, dans lequel la modulation du rayonnement électromagnétique réfléchi est supérieure à 70 % entre une zone qui comprend l'alliage et une zone qui comprend la couche telle que déposée.

14. Support selon une quelconque des revendications précédentes, dans lequel la modulation est une modulation d'intensité ou une modulation de phase.

15. Support selon une quelconque des revendications précédentes, dans lequel le support est compatible avec les normes CD et DVD.

16. Utilisation d'un support selon une quelconque des revendications 1 à 15 dans un dispositif de lecture et / ou enregistrement optique d'informations.

17. Support de stockage optique d'informations qui comprend
- un substrat porteur (5),
- un premier empilement d'enregistrement qui comprend
- une couche d'informations réfléchissante (10) qui comprend au moins une première couche (11) d'un premier matériau inorganique dans une première phase de structure, et au moins une deuxième couche (12) d'au moins un deuxième matériau inorganique dans au moins une deuxième phase de structure, au moins une couche additionnelle (4) positionnée entre le substrat porteur et la au moins une première couche (11), la au moins une couche additionnelle (4) comprenant au moins une sous-couche qui est un métal,
- des inclusions d'alliage (6) étant formées dans la couche d'informations (10), qui ont une phase de structure qui comprend un mélange du premier matériau dans la première phase de structure et du au moins un deuxième matériau dans la au moins une deuxième phase de structure,
- une couche de séparation,
- un deuxième empilement d'enregistrement essentiellement identique au premier empilement d'enregistrement.

18. Procédé de fabrication d'un support de stockage optique d'informations (1), le procédé comprenant les étapes de
- procurer un substrat porteur (5),
- procurer une couche d'informations réfléchissante (10) en déposant au moins une première couche (11) d'un premier matériau inorganique dans une première phase de structure, et déposant sur la première couche au moins une deuxième couche (12) d'au moins un deuxième matériau inorganique dans une deuxième phase de structure,
- procurer au moins une couche additionnelle (4) positionnée entre le substrat porteur et la au moins une première couche (11), la au moins une couche additionnelle (4) comprenant au moins une sous-couche qui est un métal,
- les au moins premier et deuxième matériaux inorganiques étant choisis de façon qu'une phase de structure formée par fusion et solidification d'au moins une partie de la couche d'informations procure des inclusions d'alliage (6) qui ont une phase de structure qui comprend un mélange du premier matériau dans la première phase de structure et du deuxième matériau dans la deuxième phase de structure.

19. Procédé selon la revendication 18, comprenant en outre l'étape d'exposer la couche d'informations dans un motif prédéterminé à un premier rayonnement électromagnétique, de façon à former des inclusions d'alliage dans la couche d'informations exposée.

20. Support de stockage optique d'informations procuré par le procédé des revendications 18 ou 19.

21. Procédé pour lire optiquement un support de stockage optique d'informations selon une quelconque des revendications 1 à 15, le procédé comprenant les étapes de
- émettre un rayonnement électromagnétique vers le support de stockage optique d'informations,
- détecter une modulation de phase ou d'intensité dans le rayonnement électromagnétique réfléchi à partir du support de stockage optique d'informations en réponse au rayonnement électromagnétique incident,
de façon qu'un motif d'inclusions d'alliage soit pourvu dans la couche d'informations telle que déposée par la modulation de phase ou d'intensité détectée.
